# DEMANDE DE BREVET EUROPEEN

(11) **EP 3 920 009 A1**
(43) Date de publication de la demande: **08.12.2021**
(21) Numéro de dépôt: 21176838.7
(22) Date de dépôt: 31.05.2021
(51) Int. Cl.: G06F 3/041, G06F 3/044

(54) **SYSTEME À ÉCRAN TACTILE COMPRENANT DEUX DALLES TACTILES DISPOSÉES CÔTE À CÔTE**

(30) Priorité: 04.06.2020 FR 2005847
(71) Demandeur: THALES, 92400 Courbevoie (FR)
(72) Inventeur: CHRETIEN, Sébastien, 33700 MERIGNAC (FR); DUBAU, Christophe, 33700 MERIGNAC (FR); RENAUD, Frédéric, 33700 MERIGNAC (FR)
(74) Mandataire: Marks & Clerk France

(57) **Abrégé**

Système à écran tactile comprenant deux dalles tactiles (DT1, DT2) matricielles rectangulaires décomposée en cellules disposées côte à côte formant une frontière (F) entre les deux dalles tactiles (DT1, DT2), chaque dalle tactile étant connectée à une carte électronique de gestion respective (CG1, CG2), et une liaison de communication (LC) de données entre lesdites cartes, les deux cartes et respectivement les deux dalles tactiles étant configurées en maître/esclave et pour échanger des données respectives.

## Description

L'invention porte sur un système à écran tactile comprenant deux dalles tactiles disposées côte à côte.

Le domaine de l'invention concerne le fonctionnement d'un écran tactile large écran ou "large screen" en langue anglaise, dans un cockpit d'avion. La technologie tactile actuelle ne permet pas de produire des dalles tactiles de plus de 15 pouces de diagonale. Pour pallier ce problème, deux dalles tactiles sont accolées. Chaque dalle est gérée par une carte électronique.

Une telle architecture implique les contraintes qui suivent. L'interface tactile doit être unique : le calculateur utilisant les données tactiles ne voit qu'un seul et unique capteur ; le passage d'un doigt d'une dalle à l'autre doit être transparent pour l'utilisateur. En outre, les temps de cycle dépendent des traitements effectués, notamment du nombre de doigts sur l'interface tactile, les temps de cycle des deux cartes étant donc différents.

Les futurs avions de ligne requièrent des écrans larges pour afficher les différentes informations nécessaires au bon déroulement du vol. Afin de diminuer le nombre de commandes et boutons, ces écrans sont tactiles.

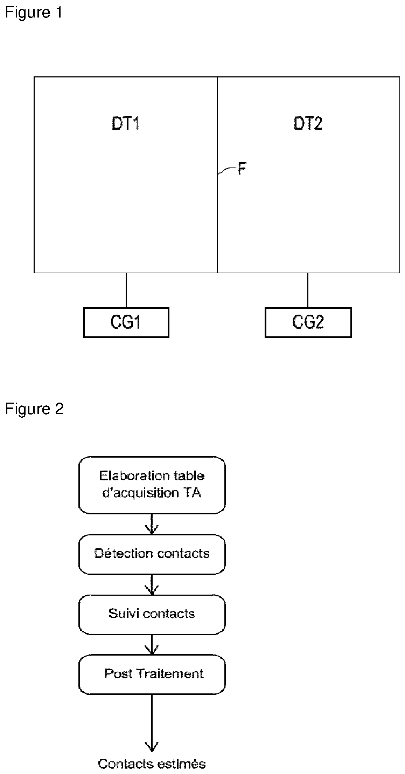

L'objectif est d'adresser des écrans dont la taille est d'au moins 15'. La technologie de dalle tactile utilisée est habituellement l'ITO pour Indium Tin Oxyde. Cependant, cette technologie est limitée par la taille des électrodes et donc leurs résistivités : 355 mm maximum pour un maillage de type diamant. Classiquement cela correspond à des tailles d'écran de 15". Aussi pour adresser des écrans de plus de 15", deux panneaux ou dalles tactiles DT1, DT2, nommés "Active Area" sont accolés et ont une frontière F correspondant à la jonction de leurs côtés mis bord à bord. Pour piloter ces deux dalles DT1, DT2, deux cartes électroniques de gestion CG1, CG2 ou "Touch Screen Board" en langue anglaise, sont utilisées, comme illustré sur la figure 1.

Il faut respecter les contraintes suivantes :
- l'interface est la même que pour une unique dalle tactile, i.e. le calculateur utilisant les données tactiles ne doit voir qu'un seul capteur ;
- le passage d'une dalle tactile à l'autre doit être transparent pour l'utilisateur ;
- gérer l'asynchronisme des deux dalles tactiles, car le temps de cycle varie en fonction du nombre de doigts en contact avec une dalle et du mode fonctionnement (débogage, opérationnel).

Une chaîne de détection classique des appuis sur une dalle tactile est illustrée sur la figure 2.

Cette chaîne débute par une élaboration d'une table d'acquisition TA des variations de capacitances des cellules de la dalle tactile. Ensuite est effectuée une détection de contacts et un suivi des contacts, par des algorithmes classiques. La détection de contacts utilise par exemple l'algorithme décrit dans le document "A comparison of algorithms for subpixel peak detection" de R. Fisher et D. K. Naidu, ImageTechnology, pp. 385-404, 1996. Le suivi de contacts utilise par exemple l'algorithme décrit dans le document "A Comparative View on Exemplar Tracking-by-Detection Approaches" d'Elie Moussy, Alhayat Ali Mekonnen, Guilhem Marion, et Frédéric Lerasle. Enfin un post-traitement est effectué sur les données de suivi des contacts, comprenant par exemple l'application d'un filtre de lissage. Les positions des contacts estimés sont délivrées en sortie de la chaîne.

Il est donc nécessaire d'adapter cette chaîne de détection à l'utilisation de deux dalles tactiles juxtaposées. Il est connu, comme mentionné dans les documents FR3072803 A1 et US 2015/0185935 de tels exemples d'adaptation de la chaîne.

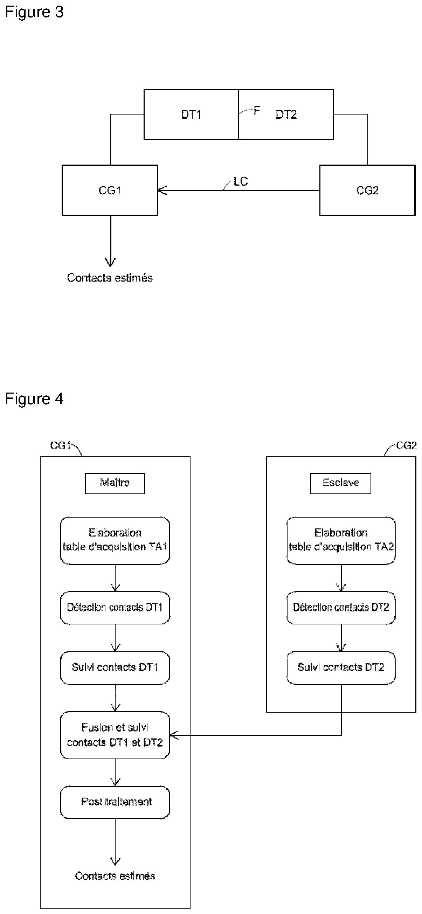

La figure 3 représente schématiquement deux dalles tactiles matricielles rectangulaires DT1, DT2, juxtaposées, comprenant une frontière F entre les deux dalles tactiles DT1, DT2, chaque dalle tactile étant connectée à une carte électronique de gestion CG1, CG2 respective. Les deux dalles tactiles DT1, DT2 et respectivement les deux cartes de gestion électroniques CG1, CG2 sont configurées en maître/esclave, l'indice 1 concernant les éléments maîtres et l'indice 2 concernant les éléments esclaves.

Une liaison de communication LC de données permet la transmission de données de la carte esclave CG2 à la carte maître CG1. Dans cette architecture de la figure 3, les cartes de gestion CG1, CG2 effectuent l'intégralité des traitements, comme illustrés sur la figure 4.

Chaque carte esclave CG1, CG2 réalise respectivement, pour sa dalle tactile associée DT1, DT2 une élaboration d'une table d'acquisition TA1, TA2 des variations de capacitances des cellules de sa dalle tactile associée. Ensuite, chaque carte esclave CG1, CG2 réalise respectivement, pour sa dalle tactile associée DT1, DT2 une détection de contacts et un suivi des contacts.

La carte esclave CG2 envoie ses résultats à la carte maître CG1, qui exécute seule une fusion et à nouveau un suivi des données élaborées par les deux cartes CG1, CG2, pour attribuer un identifiant unique à chaque contact détecté.

Enfin, la carte maître CG1 effectue, seule, un post-traitement sur les données fusionnées et suivies, comprenant par exemple l'application d'un filtre de lissage. Les positions des contacts estimés sont ensuite délivrées en sortie de la carte maître CG1.

Au niveau de la jonction ou frontière F des deux dalles tactile DT1, DT2, la carte maître CG1 gère une zone frontière ou côtière, correspondant à une distance de la frontière, en nombre de cellules, inférieure à un seuil. Sa dimension est de quelques centimètres de largeur de part et d'autre de la frontière F. Dans cette zone, la carte maître CG1 fusionne les détections d'appuis vus des deux côtés, i.e. sur les deux dalles tactiles maître DT1 et esclave DT2.

Ce mode de réalisation utilise un traitement de fusion et suivi ("merge and tracking" en langue anglaise) pour fusionner et suivre les détections des deux cartes maître CG1 et esclave CG2.

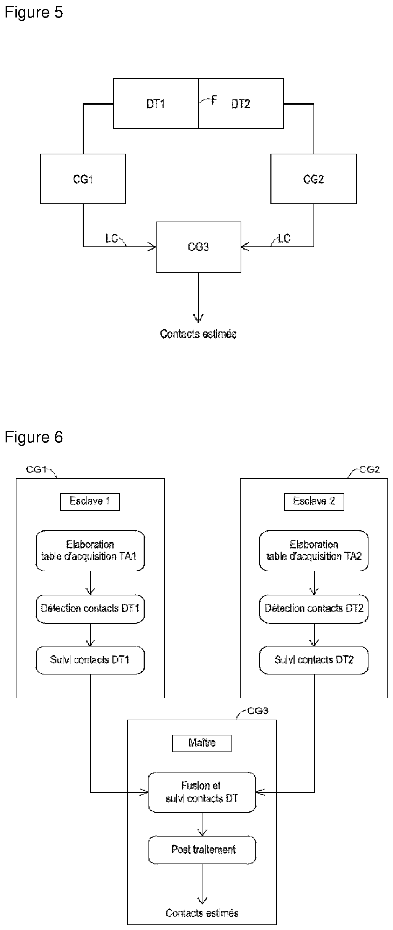

Il est également connu d'utiliser un mode de réalisation à trois cartes de gestion CG1, CG2 et CG3, tel qu'illustré sur la figure 5.

Deux dalles tactiles matricielles rectangulaires DT1, DT2, sont juxtaposées et comprennent une frontière F entre les deux dalles tactiles DT1, DT2. Chaque dalle tactile DT1, DT2 est connectée à une carte électronique de gestion CG1, CG2 respective. Les deux cartes de gestion électroniques CG1, CG2 sont chacune connectées à une troisième carte de gestion CG3. Les trois cartes de gestion CG1, CG2, CG3 sont configurées en maître/esclave, la troisième carte CG3 étant maître et les deux cartes CG1, CG2 étant esclaves.

Deux liaisons de communication LC de données permettent la transmission de données des première et deuxième cartes esclaves CG1, CG2 à la troisième carte maître CG3.

Dans cette architecture de la figure 5, les trois cartes de gestion CG1, CG2, CG3 effectuent l'intégralité des traitements, comme illustrés sur la figure 6.

Chaque carte maître CG1 et esclave CG2 réalise respectivement, pour sa dalle tactile associée DT1, DT2 une élaboration d'une table d'acquisition TA1, TA2 des variations de capacitances des cellules de sa dalle tactile associée. Ensuite, chaque carte maître CG1 et esclave CG2 réalise respectivement, pour sa dalle tactile associée DT1, DT2 une détection de contacts et un suivi des contacts.

Chaque carte esclave CG1, CG2 envoie ses résultats à la carte maître CG3, qui exécute, seule, une fusion et à nouveau un suivi des données élaborées par les deux cartes esclaves CG1, CG2, pour attribuer un identifiant unique à chaque contact détecté.

Enfin, la carte maître CG3 effectue, seule, un post-traitement sur les données fusionnées et suivies, comprenant par exemple l'application d'un filtre de lissage. Les positions des contacts estimés sont ensuite délivrées en sortie de la carte maître CG3.

Au niveau de la jonction ou frontière F des deux dalles tactile DT1, DT2, la carte maître CG3 gère une zone frontière ou côtière, correspondant à une distance de la frontière, en nombre de cellules, inférieure à un seuil. Sa dimension est de quelques centimètres de largeur de part et d'autre de la frontière F. Dans cette zone, la carte maître CG3 fusionne les détections d'appuis vus des deux côtés, i.e. sur les deux dalles tactiles DT1, DT2.

Ces modes de réalisation connus utilisant une zone frontière présentent des inconvénients.

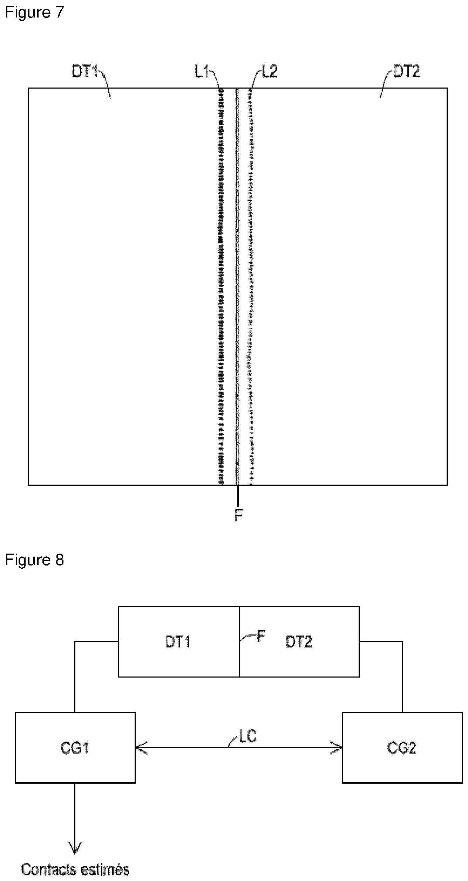

En effet, au niveau de la zone frontière, l'estimation des positions des contacts est peu précise, car la position contact est extrapolée en tenant compte de ses cellules adjacentes. Or, au niveau de la zone frontière, à proximité de la frontière F, des cellules adjacentes à celle d'un contact peuvent se situer sur l'autre dalle tactile que celle du contact. La détection des positions de contact s'en retrouve faussée, comme illustré sur la figure 7.

La figure sept représente un doigt se déplaçant sur la jonction ou frontière F des deux dalles tactiles DT1, DT2. L1 et L2 représentent les positions estimées des contacts, effectuées par les traitements de chaque carte CG1, CG2.

Une erreur de positionnement est visible. Les méthodes existantes citées consistent à fusionner ces détections biaisées pour n'en faire qu'une. La détection résultante s'en retrouve donc faussée également.

En outre, les modes de réalisation existants utilisent une fusion au niveau de la zone frontière, et comme l'illustre la figure 7, les détections estimées sont sensiblement éloignées. Cette signature est identique à celle de deux doigts proches. Le traitement de fusion ne peut différencier le cas d'un même doigt visible sur les deux panneaux du cas de deux doigts proches. Par conséquent, deux doigts proches se retrouvent fusionnés alors qu'ils n'auraient pas dû l'être.

De surcroît, ces solutions existantes mettent en œuvre des traitements supplémentaires. Les figures 4 et 6 représentent l'utilisation de trois traitements de suivi impliquant une consommation de mémoire et des temps de calculs supplémentaires.

Un but de l'invention est de pallier les problèmes précédemment cités.

Aussi, il est proposé, selon un aspect de l'invention, un système à écran tactile comprenant deux dalles tactiles matricielles rectangulaires juxtaposées, décomposée en cellules, comprenant une frontière entre les deux dalles tactiles, chaque dalle tactile étant connectée à une carte électronique de gestion respective, et une liaison de communication de données entre lesdites cartes, les deux cartes et respectivement les deux dalles tactiles étant configurées en maître/esclave, dans lequel :
- les cartes maître et esclave sont configurées pour élaborer et échanger une table d'acquisition respective des variations de capacitances de chaque cellule de leur dalle maître et esclave respective ;
- les cartes maître et esclave sont respectivement configurées pour estimer une position respective de la détection d'un contact à partir des données de la cellule centrale du contact détecté sur une dalle et d'au moins quatre cellules entourant la cellule centrale, dont au moins une cellule appartient à l'autre dalle lorsque la cellule centrale est disposée sur le bord de la frontière ;
- la carte esclave (CG2) est configurée pour transmettre la position (Det2) estimée de la détection d'un contact à la carte maître (CG1) ;
- la carte maître est configurée pour fusionner et suivre des positions des contacts détectés ; et
- la carte maître est configurée pour appliquer des post-traitements de filtrage aux positions fusionnées des contacts détectés et suivis.

Un tel système permet d'améliorer sensiblement la précision des contacts estimés, à coût réduits en termes de mémoire utilisée et temps de calcul.

Dans un mode de réalisation, les cartes maître et esclave sont configurées pour échanger leurs statuts de fonctionnement respectifs.

Ainsi, la carte maître peut élaborer un statut global des deux dalles tactiles.

Dans un mode de réalisation, les cartes maître et esclave sont configurées pour effectuer, lors de leur élaboration de table d'acquisition respective, une pré-détection d'un contact dans une zone des dalles tactiles comprenant la frontière et à une distance de la frontière, en nombre de cellules, inférieure à un seuil, et configurées pour désactiver, en cas d'absence de contact dans cette zone, les échanges entre cartes maître et esclave des tables d'acquisition respectives. Seul l'échange des tables d'acquisitions TA1, TA2 est désactivé car s'il n'y a pas de contact alors pas de position transmise (i.e. pas d'échange de contacts détectés).

Ainsi, en cas de non détection de contacts dans la zone frontière, on limite du temps de transfert de données, notamment car on limite les échanges de données.

Selon un mode de réalisation, un contact est un appui digital ou une présence de goutte d'eau.

Dans un mode de réalisation, le statut d'une carte comprend :
- un paramètre représentatif de la fonction maître ou non de la carte ; et/ou
- un paramètre représentatif de la réception d'une commande utilisateur inconnue ; et/ou
- un paramètre représentatif d'un bruit supérieur à un seuil ; et/ou
- un paramètre représentatif d'une détection d'un nombre de contacts supérieur à un seuil ; et/ou
- un paramètre représentatif d'un test en cours d'exécution ; et/ou
- un paramètre représentatif de la fonction tactile en veille de la dalle tactile respective ; et/ou
- un paramètre représentatif de l'absence de défaut de fonctionnement de la dalle tactile respective ; et/ou
- un code d'erreur représentatif d'une erreur détectée ; et/ou
- une éventuelle commande envoyée par un utilisateur.

Un tel statut permet de remonter à l'utilisateur toute anomalie déterminée sur les deux cartes.

Dans un mode de réalisation, les cartes maître et esclave sont configurées pour se synchroniser par changements d'états ou par événements logiciels ou hardware.

La synchronisation assure l'élaboration simultanée des tables d'acquisition des variations de capacitances sur chacune des deux cartes. Dans la zone frontière, cette caractéristique facilite le traitement de fusion et suivi. En effet, ce traitement n'a plus besoin de tenir compte du déplacement du contact entre les deux acquisitions pour effectuer la fusion, ce qui permet d'améliorer la fusion en limitant les risques de fusionner un contact d'un autre doigt.

Par exemple, les cartes maître et esclave sont configurées pour se synchroniser par établissement de liaison utilisant des sémaphores.

La synchronisation par sémaphore ou "handshaking" en langue anglaise, évite les temps morts, car aucune marge temporelle n'est nécessaire. Elle ne nécessite pas un temps de cycle fixe. Enfin, elle est robuste, car les deux cartes doivent s'attendre avant de continuer.

L'invention sera mieux comprise à l'étude de quelques modes de réalisation décrits à titre d'exemples nullement limitatifs et illustrés par les dessins annexés sur lesquels :
La Figure 1 illustre schématiquement un système à écran tactile comprenant deux dalles tactiles matricielles rectangulaires juxtaposées, selon l'état de l'art ;
La Figure 2 illustre schématiquement le traitement effectué par chaque carte de gestion d'un écran tactile d'un système de la figure 1, selon l'état de l'art ;
La Figure 3 illustre schématiquement un système à écran tactile comprenant deux dalles tactiles matricielles rectangulaires juxtaposées, configuré en maître/esclave, selon l'état de l'art ;
La Figure 4 illustre schématiquement le traitement effectué par deux cartes de gestion des écrans tactiles d'un système de la figure 3, selon l'état de l'art ;
La Figure 5 illustre schématiquement un système à écran tactile comprenant deux dalles tactiles matricielles rectangulaires juxtaposées, configuré en maître/esclave, selon l'état de l'art ;
La Figure 6 illustre schématiquement le traitement effectué par trois cartes de gestion des écrans tactiles d'un système de la figure 5, selon l'état de l'art ;
La Figure 7 illustre schématiquement le résultat de l'estimation des contacts par les modes de réalisation des figures précédentes, selon l'état de l'art ;
La Figure 8 illustre schématiquement un système à écran tactile comprenant deux dalles tactiles matricielles rectangulaires juxtaposées, configuré en maître/esclave, selon un aspect de l'invention ;
La Figure 9 illustre schématiquement le traitement effectué par deux cartes de gestion des écrans tactiles d'un système de la figure 8, selon un aspect de l'invention ;

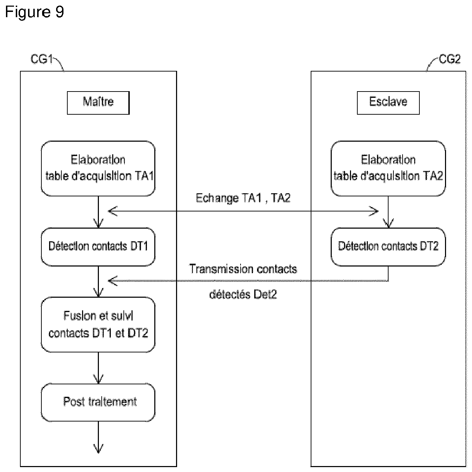

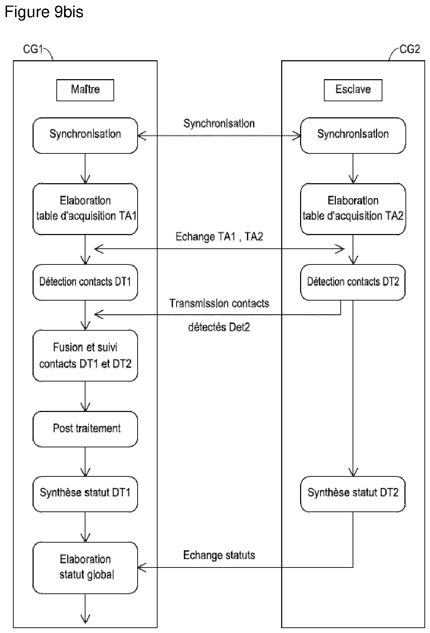

La Figure 9bis illustre schématiquement le traitement effectué par deux cartes de gestion des écrans tactiles d'un système de la figure 8, selon un aspect de l'invention ;

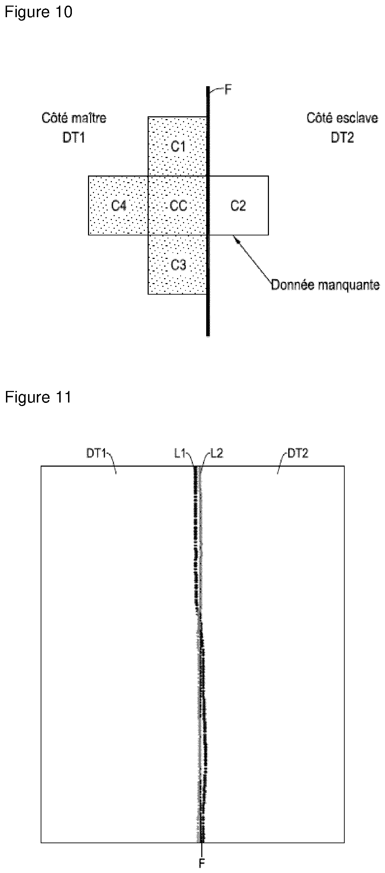

La Figure 10 illustre schématiquement un détail de cellules dans la zone frontière, selon un aspect de l'invention ;
La Figure 11 illustre schématiquement le résultat de l'estimation des contacts par les modes de réalisation des figures précédentes, selon un aspect de l'invention ; et

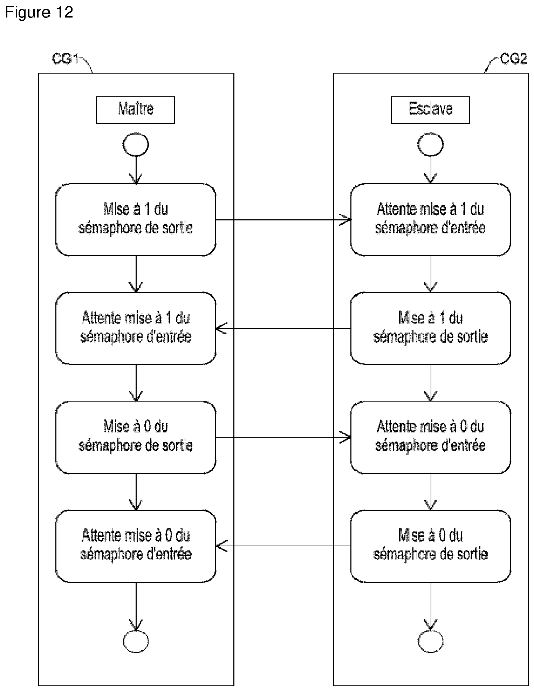

La Figure 12 illustre schématiquement une synchronisation des cartes de gestion maître et esclave utilisant des sémaphores, selon un aspect de l'invention.

Sur l'ensemble des figures, les éléments ayant des références identiques sont similaires.

Sur la figure 8 est illustré, selon un aspect de l'invention, un système à écran tactile comprenant deux dalles tactiles DT1, DT2 matricielles rectangulaires juxtaposées, décomposée en cellules, et comprenant une frontière F entre les deux dalles tactiles.

Chaque dalle tactile DT1 DT2 est connectée à une carte électronique de gestion respective CG1, CG2, et une liaison de communication LC de données entre les cartes CG1, CG2 leur permet d'échanger des données.

Les deux cartes CG1, CG2 et respectivement les deux dalles tactiles DT1, DT2 sont configurées en maître/esclave.

La figure 9 illustre le fonctionnement du système selon un aspect de l'invention.

Les cartes maître CG1 et esclave CG2 sont configurées pour élaborer et échanger une table d'acquisition respective TA1, TA2 des variations de capacitances de chaque cellule de leur dalle tactile respective DT1, DT2.

Les cartes maître CG1 et esclave CG2 sont respectivement configurées pour estimer une position respective Det1, Det2 de la détection d'un contact à partir des données de la cellule centrale CC du contact détecté sur une dalle et d'au moins quatre cellules C1, C2, C3, C4 entourant la cellule centrale CC, dont au moins une cellule appartient à l'autre dalle (DT2, DT1) lorsque la cellule centrale (CC) est disposée sur le bord de la frontière (F), comme cela est illustré sur la figure 10.

La carte esclave (CG2) est configurée pour transmettre la position (Det2) estimée de la détection d'un contact à la carte maître (CG1).

Un contact peut être un appui digital ou une présence de goutte d'eau.

La carte maître CG1 est configurée pour fusionner et suivre des positions des contacts détectés, et pour appliquer des post-traitements de filtrage aux positions fusionnées des contacts détectés et suivis.

Comme illustré sur la figure 9bis, de manière optionnelle, le système selon un aspect de l'invention peut comprendre une ou deux caractéristiques techniques optionnelles parmi les deux qui suivent.

Les cartes maître et esclave CG1, CG2 sont configurées pour échanger leurs statuts de fonctionnement SF1, SF2 respectifs, et/ou pour se synchroniser par établissement de liaison utilisant des sémaphores.

Le statut de fonctionnement d'une carte de gestion CG1, CG2 d'une dalle tactile DT1, DT2, correspond à des valeurs, élaborées par la carte de gestion associée à la dalle tactile, de paramètres de fonctionnement de la dalle tactile.

Le statut d'une carte de gestion peut comprendre :
- un paramètre Master représentatif de la fonction maître ou non de la carte ; et/ou
- un paramètre Request_Error représentatif de la réception d'une commande inconnue ; et/ou
- un paramètre Touch_too_high représentatif d'une détection d'un nombre de contacts supérieur à un seuil ; et/ou
- un paramètre Test_in_progress représentatif d'un test en cours d'exécution ; et/ou
- un paramètre Idle représentatif de la fonction tactile en veille de la dalle tactile respective ; et/ou
- un paramètre Smooth_Running représentatif de l'absence de défaut de fonctionnement de la dalle tactile respective ; et/ou
- un code d'erreur Code_Error représentatif d'une erreur détectée ; et/ou
- une éventuelle commande Order envoyée par un utilisateur.

L'échange respectif entre les cartes CG1 maître et esclave CG2 à effectuer est celui des tables d'acquisition respectives TA1, TA2 des variations de capacitances ("Diff Data" en langue anglaise) des dalles tactiles DT1, DT2. Cet échange est nécessaire pour calculer précisément la position des détections de contacts. La détection capacitive consiste à réaliser une matrice de détection ou table d'acquisition composée de lignes et de colonnes conductrices agencées de façon à détecter les variations locales de capacité introduites par la proximité des doigts de l'utilisateur ou de tout autre objet de désignation conducteur. Une variation de capacitance est mesurée au niveau de chaque cellule. La position est alors estimée en prenant en compte la cellule centrale CC et au moins quatre cellules autour C1, C2, C3, C4, comme représenté sur la figure 10. Cependant, à la jonction F des deux dalles tactiles, des cellules nécessaires au calcul de la position d'une cellule centrale CC d'une dalle tactile peuvent être situées sur l'autre dalle tactile.

Aussi, chaque carte CG1, CG2 peut estimer avec une précision améliorée la détection d'un contact dans la zone frontière, car elle a également connaissance de la table d'acquisition de l'autre carte, donc des données de variation de capacitance des cellules entourant la cellule centrale et appartenant à la dalle tactile connectée à l'autre carte de gestion.

L'échange ou plutôt transfert de la carte esclave CG2 vers la carte maître CG1 des contacts détectés Det2 par la carte esclave CG2 permet à la carte de maître CG1 de ne faire qu'un seul suivi, après avoir fusionné les détections de contacts estimés par les deux cartes, grâce à l'échange des cartes d'acquisition TA1, TA2.

L'échange respectif entre les cartes CG1 maître et esclave CG2, des statuts de fonctionnement des cartes CG1, CG2 permet de fournir à l'utilisateur un statut global des deux cartes.

L'échange respectif entre les cartes CG1 maître et esclave CG2, de données de synchronisation permet de synchroniser les cartes CG1 maître et esclave CG2, par établissement de liaison utilisant des sémaphores, ce qui permet d'élaborer simultanément des tables d'acquisition. Cela a l'avantage de simplifier le travail de fusion sur la zone frontière. En effet, le déplacement du contact entre les deux acquisitions, au niveau de la zone frontière, n'est pas à prendre en compte.

La figure 11, illustre l'amélioration de la précision des détections de contacts de chaque carte dans la zone frontière, après l'échange des cartes d'acquisition TA1, TA2, entre les cartes CG1 maître et esclave CG2, des tables d'acquisition respectives TA1, TA2 des variations de capacitances des dalles tactiles respectives DT1, DT2. La précision est nettement améliorée en comparaison de celle de la figure 7, sans cet échange.

Les cartes maître CG1 et esclave CG2 peuvent être configurées pour effectuer, lors de leur élaboration de table d'acquisition respective TA1, TA2, une pré-détection d'un contact dans une zone frontière, i.e. une zone des dalles tactiles comprenant la frontière F et à une distance de la frontière, en nombre de cellules, inférieure à un seuil, et configurées pour, en cas d'absence de contact dans cette zone, désactiver les échanges entre cartes maître CG1 et esclave CG2 des tables d'acquisition respectives TA1, TA2. Ainsi, en cas d'absence de détection de contact dans la zone frontière, ces traitements et échanges de données sont évités ce qui limite alors le temps calcul et la mémoire nécessaire.

Le quatrième échange est détaillé sur la figure 12 qui représente un exemple de synchronisation par établissement de liaison ("handshake" en langue anglaise) utilisant des sémaphores, ce qui assure une robustesse de synchronisation.

## Revendications

1. Système à écran tactile comprenant deux dalles tactiles (DT1, DT2) matricielles rectangulaires juxtaposées, décomposée en cellules, comprenant une frontière (F) entre les deux dalles tactiles, chaque dalle tactile étant connectée à une carte électronique de gestion (CG1, CG2) respective, et une liaison de communication (LC) de données entre lesdites cartes (CG1, CG2), les deux cartes (CG1, CG2) et respectivement les deux dalles tactiles (DT1, DT2) étant configurées en maître/esclave, dans lequel :
- les cartes maître (CG1) et esclave (CG2) sont configurées pour élaborer et échanger une table d'acquisition respective (TA1, TA2) des variations de capacitances de chaque cellule de leur dalle tactile maître (DT1) et esclave (DT2) respective ;
- les cartes maître (CG1) et esclave (CG2) sont respectivement configurées pour estimer une position respective (Det1, Det2) de la détection d'un contact à partir des données de la cellule centrale (CC) du contact détecté sur une dalle (DT1, DT2) et d'au moins quatre cellules (C1, C2, C3, C4) entourant la cellule centrale (CC), dont au moins une cellule appartient à l'autre dalle (DT2, DT1) lorsque la cellule centrale (CC) est disposée sur le bord de la frontière (F) ;
- la carte esclave (CG2) est configurée pour transmettre la position (Det2) estimée de la détection d'un contact à la carte maître (CG1) ;
- la carte maître (CG1) est configurée pour fusionner et suivre des positions des contacts détectés ; et
- la carte maître (CG1) est configurée pour appliquer des post-traitements de filtrage aux positions fusionnées des contacts détectés et suivis.

2. Système selon la revendication 1, dans lequel les cartes maître (CG1) et esclave (CG2) sont configurées pour échanger leurs statuts de fonctionnement (SF1, SF2) respectifs.

3. Système selon l'une des revendications précédentes, dans lequel les cartes maître (CG1) et esclave (CG2) sont configurées pour effectuer, lors de leur élaboration de table d'acquisition respective (TA1, TA2), une pré-détection d'un contact dans une zone des dalles tactiles comprenant la frontière (F) et à une distance de la frontière, en nombre de cellules, inférieure à un seuil, et configurées pour désactiver, en cas d'absence de contact dans cette zone, les échanges entre cartes maître et esclave des tables d'acquisition respectives et des positions de contacts détectés.

4. Système selon l'une des revendications précédentes, dans lequel un contact est un appui digital ou une présence de goutte d'eau.

5. Système selon l'une des revendications précédentes, dans lequel le statut d'une carte comprend :
- un paramètre (Master) représentatif de la fonction maître ou non de la carte ; et/ou
- un paramètre (Request_Error) représentatif de la réception d'une commande utilisateur inconnue ; et/ou
- un paramètre (Touch_too_high) représentatif d'une détection d'un nombre de contacts supérieur à un seuil ; et/ou
- un paramètre (Test_in_progress) représentatif d'un test en cours d'exécution ; et/ou
- un paramètre (Idle) représentatif de la fonction tactile en veille de la dalle tactile respective ; et/ou
- un paramètre (Smooth_Running) représentatif de l'absence de défaut de fonctionnement de la dalle tactile respective ; et/ou
- un code d'erreur (Code_Error) représentatif d'une erreur détectée ; et/ou
- une éventuelle commande (Order) envoyée par un utilisateur.

6. Système selon l'une des revendications précédentes, les cartes maître (CG1) et esclave (CG2) sont configurées pour se synchroniser par changements d'états ou par événements logiciels ou hardware.

7. Système selon la revendication 6, dans lequel les cartes maître (CG1) et esclave (CG2) sont configurées pour se synchroniser par établissement de liaison utilisant des sémaphores.
